# EUROPEAN PATENT SPECIFICATION

(11) **EP 1 633 921 B1**
(45) Date of publication and mention of the grant of the patent: **14.01.2009**
(21) Application number: 04737011.9
(22) Date of filing: 17.06.2004
(51) Int. Cl.: D06H 5/00, A41D 27/24, B29C 65/50

(54) **PROCESS FOR OBTAINING A FUSED SEAM FOR PIECES OF FABRIC**
VERFAHREN ZUR HERSTELLUNG EINES GESCHWEISSTEN NAHTS FÜR STOFFTEILE
PROCEDE DE FABRICATION DE COUTURES SOUDEES POUR PIECES DE TISSU

(30) Priority: 18.06.2003 PT 10297403
(43) Date of publication of application: 15.03.2006
(73) Proprietor: Petratex-Confeccoes, S.A., P - 4590 Paços de Ferreira (PT)
(72) Inventor: SILVA NETO, Sérgio, Manuel, Da, P-4780 Santo Tirso (PT)
(74) Representative: Pereira da Cruz, Joao
(86) International application number: PCT/PT2004/000013
(87) International publication number: WO 2004/111329

(56) References cited:
- EP-A- 0 708 163
- DE-B- 2 918 410
- FR-A- 1 359 269
- FR-A- 2 449 743
- FR-A- 2 828 071
- US-A- 3 785 898
- US-A- 4 410 575
- US-B1- 6 171 431

## Description

The present invention relates to a process for obtaining a fused seam for pieces of fabric made of synthetic or natural fibres. It is a strong and flexible seam obtained by the application of a thermofusible film which, by means of pressure and temperature in suitable machines, joins two layers of fabric.

A few methods for obtaining seams by fusing thermofusible material are known. These include the documents US 6.521.067, which relates to a method for obtaining seams using ultrasounds, patent application WO 037033796, which relates to a non-sewn seam, and UK patent 988.346, which relates to the joining of textile webs.

Other documents refer also to seams and methods by fusing thermofusible material, such as:
FR 2 828 071 relates to a stabilizing and assembly procedure for a cut-out textile panel without seams. The procedure consists of stabilizing the edges of a textile panel by applying an additional layer, for example of a trimming material to it before it is cut out to prevent the cut edge from fraying.

Document US 6,171,431 relates to a multi-layered flexible product which can be used as a liner for an outer shell or as a stand-alone product. A substrate fabric material is placed in parallel with a synthetic film membrane to form a two ply laminate, and with outer substrate fabric material(s) to form multi-ply laminates. A thermoplastic film is strategically placed in between the layers to enhance bonding. The laminate(s) and/or separate sheets of above materials are assembled by using a radio frequency welding process and then out into two or three dimensional forms

Patent EP 0 708 163 relates to an adhesive sheet which comprises a support sheet having stretching elasticity and resistance to heat, wherein a hot-melt adhesive layer having stretching elasticity is provided on at least one surface of said support sheet.

Patent US 3,785,898 relates to apparatus for producing seamed articles from sheet material, wherein a plurality of layers of sheet material, to be joined to one another along desired seam lines to produce garment components or other articles, are supported on a supporting surface.

Patent US 4,410,575 relates to a lap welding method for textile fabrics, wherein textile fabrics are firmly lap welded to each other by superposing two end portions of one or two fabrics on each other while interposing a piece of a synthetic polymeric bonding tape between the superposed two end portions and by applying a high frequency wave treatment and/or heat treatment to the interposed portion of the bonding tape through at least one of the superposed end portions while pressing them, to melt the interposed portion of the bonding tape thereby lap welding the end portions of the fabric or fabrics to each other.

Patent FR 1 359 269 relates to a method for welding together fabrics that have undergone a waterproofing treatment which does not, in itself, permit such welding. This method consists of placing a strip of thermoplastic material between the superposed edges of two pieces of fabric to be joined and subsequently welding the whole using a high frequency, heat pulse or any other type of welding machine.

However, the usual technique for making a seam has several inconveniences. In fact, the ready-to-wear clothing industry is faced with a few problems, namely the fraying of certain fabrics, torsion and the slipping of the fabric when making a traditional seam, for example in the case of elastic or very soft fabrics and also thick fabrics. As regards the abovementioned techniques, no processes are described for obtaining a perfectly finished seam without any threads of the fabrics that make the join. Furthermore, the known processes for obtaining seams are slow and do not allow for mass production.

In the field of seamless fabrics, this is the first time that it has been possible to make a piece of clothing from fabric without any seams.

The present invention relates to a process for obtaining a fused seam which consists of the joining of two layers of fabric by means of a thermofusible film. The process of thermofusion is achieved by the combined action of pressure and temperature. The result is a seam which is not raised above the level of the fabrics that constitute the join and is perfectly finished, meaning that there are no threads of the seamed fabrics or of the seam itself, as in the case of a traditional seam. It therefore resolves the problem of fraying or torsion in seams made by the traditional method.

The seam, obtained by fusing two pieces of fabric, consists of the joining of two layers of fabric by means of a thermofusible film. The seam is therefore perfectly finished without any threads of the seamed fabrics or of the seam itself, as would be the case with a traditional seam. This type of seam obtained by fusing two pieces of fabric is not raised above the level of the fabrics to be joined together.

The process for obtaining the fused seam of the invention is characterised by the following operations:
- The fabric is cut using predefined templates for a particular model;
- The glue film is cut with suitable blade cutters using a screw press and it is subsequently placed on the part of the fabric where the join is to be made;
- The fabric and film are placed in a press in order to fuse the glue film and stick it to the attached fabric;
- After the above operation, a trimming machine is used to trim about 2 mm of the fabric with glue in order to remove the threads that have frayed naturally; the machine, created and developed specifically for this purpose, is fitted with special conveyor and cutting equipment which trims about 2 mm of the fabric with glue in order to remove the threads that have frayed naturally, after which the paper supporting the glue film is removed and the fabric that is going to complete the seam is glued using either rotary presses or a specific machine which combines the effect of a press with aspiration;
- The piece of fabric which now consists of two pieces is placed inside a press where the action of pressure and temperature completely fuses the glue film in order to finish off the seam; the glue film is cut with blade cutters in a screw press.

The first pressing operation takes place in a plate press (rotary press) at a pressure of around 3 to 5 Kgf, at a temperature of around 160° to 180° C and for a period of about 15 to 30 seconds, these being values that may vary depending on the fabric to be joined. The plate press is manual and the following alterations were made:
- the design of the lower plate was adapted to the shape of the piece of fabric in order to allow easy access to all the seams;
- an aspiration system was fitted, also in the lower plate, in order to hold the pieces of fabric in place and keep them in the desired position;
- the system was adapted to control the time, temperature and pressure.

If there is a seam with piping, i.e. where three layers of fabric are joined, the first and third layers are the base fabric and the middle layer is the fabric that will form the piping. The gluing process is as described above, for the type of seam with only two pieces of fabric, and it is carried out in succession on each layer of fabric. Subsequently, the various layers of joined fabric are placed in a piping trimming machine, which has an optical reader in order to follow the design of the template and trim the respective piping.

Machines for trimming seams and piping are sewing machines that have been duly altered. The sewing system is removed from these traditional sewing machines, the dragging system is substituted and the lateral blade is designed and positioned in such a way as to allow the seams and piping to be trimmed. We have also created a new shoe adapted to the work to be carried out.

Clothes made in this way, i.e. without traditional seams, are very practical and comfortable. In fact, when two pieces of fabric are joined in accordance with the invention, there is no formation of the traditional seam, which is raised considerably above the level of the fabric, creating a "banana" effect. This drastically reduces the user's comfort.

This type of seam is especially suitable for clothes which are in direct contact with the user's skin. This type of clothing includes in particular sportswear.

## Claims

1. A process for obtaining a fused seam which comprises joining two layers of fabric by means of a thermofusbile film, comprising by the following operations:
- The fabric is cut using predefined templates for a particular model;
- The glue film is cut with suitable cutters and it is subsequently placed on the part of the fabric where the join is to be made;
- The fabric and film are placed in a press in order to fuse the glue film and stick it to the attached fabric;
- After the above operation, a trimming machine is used to trim about 2 mm of the fabric with glue in order to remove the threads that have frayed naturally;
- The paper supporting the glue film is removed and the fabric that is going to complete the seam is glued;
- The fabric, which now consists of two pieces, is placed inside a press where the action of pressure and temperature completely fuses the glue film in order to finish off the seam.

2. A process for obtaining a fused seam according to claim 1, **characterized in that** the first pressing operation takes place in a rotary press at a pressure of around 3 to 5 Kgf, at a temperature of around 160° to 180° C and for a period of about 15 to 30 seconds these being valves that may vary depending on the fabric to be joined.

## Patentansprüche

1. Ein Verfahren zur Herstellung einer Schmelzschweißnaht, bestehend aus der Verbindung zwei Gewebschichten durch einen Heißschmelzfilm und das die folgenden Vorgänge einschließt:
- Das Gewebe wird mit einer vorbestimmten Nachformschablone für ein bestimmtes Modell geschnitten;
- Der Klebfilm wird in einer geeigneten Abschneidvorrichtung geschnitten und wird anschließend an der Stelle des Gewebes, wo die Verbindung gemacht werden soll, angestellt;
- Das Gewebe und der Film werden in einer Presse gelegt, um den Klebfilm zu schmelzen, und ihn an dem angehefteten Gewebe zu haften;
- Nach dem oben gennanten Vorgang, wird eine Beschneidemaschine verwendet, um ungefähr 2 mm des Gewebes mit Klebstoff zu beschneiden, um die natürlich ausgefransten Faden zu entfernen;
- Das Papier, das den Klebfilm stützt, wird beseitigt und das Gewebe, das die Naht ausführen soll, wird geklebt;
- Das Gewebe, das nun aus zwei Stücke besteht, wird in einer Presse gestellt, wo der verwendete Druck und die Temperatur den Klebfilm völlig schmelzt, und somit die Naht vervollständigt.

2. Ein Verfahren zur Herstellung einer Schmelzschweißnaht gemäss Anspruch 1,
**dadurch gekennzeichnet, dass** der erste Vorgang in einer Rotationspresse mit einer Druck von etwa 3 bis 5 kg, bei einer Temperatur zwischen ca. 160°C und 180°C und für ca. 15 bis 30 Sekunden stattfindet. Je nach Gewebe, das genäht sein soll, können diese Werte varierien.

## Revendications

1. Procédé de fabrication de coutures soudées qui comprend la jonction de deux couches de tissu au moyen d'un film thermofusible, comportant les opérations suivantes :
- Le tissu est coupé en utilisant des patrons prédéfinis pour un certain modèle ;
- Le film de colle est coupé avec une découpeuse appropriée et il est placé ensuite sur la zone du tissu où la jonction sera faite ;
- Le tissu et le film sont placés dans une presse afin de souder le film de colle et le faire adhérer au tissu attaché ;
- À la suite de l'opération antérieure, une machine de taille est utilisée pour tailler environ 2 mm du tissu avec colle afin d'éliminer les fils qui se sont effilochés naturellement ;
- Le papier de support du film de colle est enlevé et le tissu qui va compléter la couture est collé ;
- Le tissu, qui est composé maintenant de deux pièces, est placé dans une presse où l'action de pression et de température soude totalement le film de colle afin de terminer la couture.

2. Procédé de fabrication de coutures soudées selon la revendication 1, **caractérisé en ce que** la première opération de presse est réalisée dans une presse rotative à une pression d'environ 3 à 5 Kgf, à une température d'environ 160° à 180° C et pendant une période d'environ 15 à 30 secondes, celles-ci étant des valeurs qui peuvent varier selon le tissu à être joint.
